# EUROPEAN PATENT SPECIFICATION

(11) **EP 3 085 241 B1**
(45) Date of publication and mention of the grant of the patent: **25.07.2018**
(21) Application number: 16020271.9
(22) Date of filing: 15.07.2016
(51) Int. Cl.: A23G 3/02, A23G 1/18, A23G 1/46, A23G 1/00

(54) **TEMPERING APPARATUS FOR CHOCOLATE AND CREME MASS**
TEMPERIERUNGSVORRICHTUNG FÜR SCHOKOLADEN- UND CREMÉ-MASSE
APPAREIL DE TREMPE POUR MASSE DE CHOCOLAT ET CRÈME

(43) Date of publication of application: 26.10.2016
(73) Proprietor: Aasted ApS, 3520 Farum (DK)
(72) Inventor: Holmud, Dennis, DK-2860 Søborg (DK)
(74) Representative: Heiden, Finn

(56) References cited:
- EP-A1- 0 685 168
- EP-A1- 1 616 487
- EP-A2- 0 289 849
- EP-A2- 0 806 149
- EP-A2- 2 210 500
- DE-C1- 10 118 354

## Description

The present invention concerns an apparatus comprising a cooling stage and a crystallisation stage for continuous tempering of a fat-containing, crystallisable mass such as chocolate mass or creme mass, comprising a column of mass chambers and intermediary water chambers arranged in stacked elements, a central drive shaft in engagement with mixing elements arranged in the mass chambers, and which crystallisation stage is arranged in the column.

Generally, chocolate or creme mass continuously tempered by the apparatus according to the invention encompass all types of suspensions of non-fat particles such as sugar, milk powders and cocoa solids mixed up with a liquid fat constituent, so that the suspensions are capable of crystallizing. It could be both chocolate types used in any kind of production of chocolate articles or it could be creme mass used inside articles as filling, upon or as "sandwiching" layers in articles in both production of bakery articles as well as of chocolate articles. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

For the continuous tempering to be performed, it is decisive, that whether the fat phase constitutes of genuine cocoa butter or substitutes, the fat phase must be capable of crystallizing into stable crystal types, such as the βV-crystals developing in genuine cocoa butter. However, it is important to avoid instable crystals in the solidified mass. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

For the manufacturers of articles made by such masses, it is always desirable, that the prior art tempering apparatus can deliver tempered mass having a content of the stable crystal-type only, such as βV-crystals in chocolate mass. Only then, the manufacturer can rely on, that the quality of his chocolate products are consistent.

The prior tempering apparatus of the introductory art comprise a cooling stage, a crystallization stage and a reheating stage arranged in the column. The stages are typically arranged each in their own separate section of the column, often separated by an isolation disc between neighboring chambers. Some apparatuses have the cooling and crystallization stages arranged in the same section of the column. However, all the prior art apparatuses have columns, which are high, heavy and extensive.

Before the chocolate or creme mass is supplied to perform the actual tempering process it is heated to around 40-50°C in a premature step. All the crystals in the particular mass are melted out and dissolved in the mass before the mass is pumped continuously through the cooling stage of the column. The premature step is typically arranged distant to the tempering apparatus, the mass being heated in a storage tank. However, a premature heating step could also be arranged in the tempering column in front of the cooling stage, which then makes the column even higher.

The chamber surfaces of the cooling and crystallisation stages are kept "cold" with temperatures typically between 8-15 °C regulated by the temperature and flow of the water in the intermediary chambers. The low temperatures are necessary for the heat-exchange of the cooling and crystallisation stages of the column to be as effective as possible. Otherwise, the columns would be even higher for a particular maximum capacity and mass type. However, the disadvantages of the "cold" surface temperatures in the cooling and crystallisation chambers are creation of in-stable crystals simultaneously with the creation of the stable crystals. This phenomenon is especially extensive in the cooling stage.

In the reheating stage, the temperature of the mass is raised only slightly being sufficient for melting up again the in-stable crystals only. They are then not present in the mass any longer, however, the desirable stable crystals, such as the βV-crystals in chocolate, are still preserved. A high and extensive reheating stage of the column is necessary when complete re-melting of the undesirable, instable crystals must be ensured.

When mass with high fat content such as milk chocolate, white chocolate, nougat or filling mass for pralines are tempered, then the amount of in-stable crystals created in the cooling stage is often much too high. The surfaces must be even colder for obtaining an acceptable capacity of tempered mass per hour. So, when chocolate with high fat content is tempered, then, the problems of the high columns are even more relevant

A given size of a tempering machine at the market has a fixed length of the column and consequently fixed areas for cooling, crystallisation and reheating.
Due to the above described problematic of continuous tempering of masses with a high fat content, it is well-known today, that the maximum capacity measured in kilograms per hour of tempered mass for a given tempering machine at the market, is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered. When high fat recipes having fat content between 40% and 100% are tempered, the maximum capacity is lowered up to 50%.

Another major disadvantage for the high columns is a very high energy consumption, firstly for cooling down the total mass and secondly for reheating the mass. Also the energy requirements are high for the chocolate pumps and the gear motors of the tempering columns.

The center of gravity of the columns are high above the floor level, which makes the apparatus difficult and cumbersome to transport, maneuver and install in factories. When adapted for tempering of higher capacities of mass, such as typically more than 3000kg/hour, the apparatuses are so high, that they have to be tilted or laid down to horizontal during handling and transportation. This especially applies when the apparatuses are adapted for tempering of mass with high fat-content such as nougat, raw chocolate mass or chocolate liquor requiring around the double cooling capacity than dark chocolate. The columns constitute of heavy cast-iron elements each having a water and a mass chamber. Each element of the big columns may weight up to more than hundred kilograms. When being stacked upon each other the elements constitute the column. Handling and stacking of the heavy elements are difficult and time-consuming and has to be done directly on the apparatus support frame for the bigger versions. Afterwards, the high and heavy columns are difficult to handle and move around in the production environment, for example when the electrical installations has to be made in another area of the factory.

EP2210500A2 discloses an apparatus for continuous tempering of a fat-containing, crystallisable mass such as chocolate mass, comprising a cooler or heat exchanger connected via a pump with a tempering apparatus. The mass is cooled in the cooler or heat exchanger before it is split in two streams of which one enters the tempering apparatus and the other stream by-passes the tempering apparatus. The two streams are thereafter mixed together. The disclosure is silent about the layout of the heat exchanger.

EP1616487A1 discloses an apparatus for continuous tempering of a fat-containing, crystallisable mass such as chocolate mass, comprising a column of mass chambers and intermediary water chambers arranged in stacked elements, a central drive shaft in engagement with mixing elements arranged in the mass chambers, and which crystallization stage is arranged in the column. However, the cooling stage is also arranged in the column. A closed-loop is arranged for reversing part of the crys-tallized mass to the column. In the closed-loop circuit is arranged a dynamic heat exchanger comprising moving parts, especially scraper elements which continuously removes mass from the surfaces.

EP0685168A1 discloses an apparatus of the introductory art by which a cooling stage A1, a crystallization stage Ak and a reheating stage A2 are arranged in the column. The column itself is high and heavy with the center of gravity at a high level. The apparatuses are then both cumbersome and difficult to build, handle and install in a chocolate production factory.

The inventive apparatus is characterised in, that the cooling stage is arranged in a heat exchanger having at least one row of parallel plates arranged in a stack sealed at their edges providing intermediary, neighbouring channels each having an inlet hole and an outlet hole in each of the plates, that every second channel in the row is connected with a common first inlet channel created by the first inlet holes in the plates and a common first outlet channel created by the first outlet holes in the plates for the flow of mass there through,
and that each of the intermittent, neighbouring channels are connected with a common second inlet channel created by the second inlet holes in the plates and a common second outlet channel created by the second outlet holes in the plates for the flow of water medium there through.

In the common first inlet channel the mass is being split into several streams when entering each second channel in the row. The mass is then flowing in a row of parallel streams through the heat exchanger, simultaneously being tempered by intermittent, neighboring channels each with water medium flowing there through.

The tempering of the parallel streams of mass is highly effective. Consequently, the inventive heat exchanger has much smaller outside dimensions than the cooling stage of a prior art column, but is however, still achieving the same cooling effect. Advantageously, the cooling stage heat exchanger fits in several places in the apparatus beside the column, so that the cooling stage is no longer part of the column itself. The inventive apparatus is then both smaller in size and much lower in height than the prior art apparatus. The weight savings are very high as the inventive plate heat exchanger typically reduces the weight of the cooling stage 200-500% in comparison with the prior art apparatus.

The mass channels of the cooling stage heat exchanger of the inventive apparatus are free from any intermediary scrapers, discs or wings moving through the chambers such as by the cooling stages of the prior columns. The channels are slim in comparison to the extension of the plates. The row of the many parallel channels ensure that the mass is split into several "plate-like" streams, each of them all being exposed to accurately the same tempering conditions exercised by each of the intermittent, neighboring water channels. The inventive heat exchanger is then much more effective than a column of the same volume. When comparing length or width of the inventive cooling stage heat exchanger with diameter of the column, the inventive heat exchanger is superior.

The plates of the row of parallel plates can have several forms such as being planar or corrugated as long as the mass is flowing in a row of parallel streams through the cooling stage heat exchanger, simultaneously being tempered by intermittent, neighboring channels each with water medium flowing there through.

When the intermediary, neighbouring channels between the parallel plates have a width of 1-10 mm, the mass flow through the channels simultaneously as a row of parallel plates or sheets. Most preferably, the channels have a width of 2-5 mm, so that the mass flow through the channels as thick, separated pages in a big book. When the channels have a width of 1-2 mm the mass flow as film-like sheets or as pages in a big book.

The cooled mass is completely homogenous and uniform in constitution and temperature when leaving the common first outlet channel. The temperature of the mass leaving the common first outlet channel is then controlled sharply within tenths of a degree. Consequently, the particular mass can be controlled exactly to a temperature just above the crystal-creating temperature of that mass. This is especially desirable when high-quality mass is tempered. No crystals are made in the mass in the cooling stage, and when the mass enters the crystallization stage of the column, very little cooling is necessary for the creation of the crystals. With other words, the mass is cooled in the inventive plate heat exchanger without the creation of any crystals, which then is ignited when the mass enters the crystallization stage of the column. When no crystals are made in the inventive cooling stage - neither the desirable βV-crystals for chocolate mass, nor any lower melting crystals, such as the βIV-crystals, then is the process extremely well-controlled.

When the crystallization stage extends over all the chambers of the column, the re-heating section is omitted. This requires, that the crystallization stage is able to create the desirable, stable crystals in the mass only, such as the the βV-crystals in chocolate mass. Creation of undesirable lower melting crystals in the mass must be avoided, otherwise the reheating section is needed.
However, when the crystallization stage extends over all the chambers of the column, so that the reheating section is omitted, the height and weight of the column and consequently of the inventive apparatus is the lowest possible in comparison with the prior art.

When the row of plates is arranged as a cubic stack, and the common first inlet channel is connected with a mass inlet tube part at one side of the stack and the common first outlet channel is connected with a mass outlet tube part at the opposite side of the stack, and the common second inlet channel is connected with a water inlet tube part at one side of the stack and that the common second outlet channel is connected with a water outlet tube part at the opposite side of the stack, or vice versa, then the cooling stage heat exchanger is easy and fast to assemble and mount in the apparatus. The geometric cubic stack shape provides for easy fitting in of the stack in corners of the apparatus, close to the floor in the support frame of the apparatus or beside the column.

When the mass inlet tube part and the water outlet tube part are arranged at the same side of the stack, and at the opposite side of the stack are arranged both the mass outlet tube part and the water inlet tube part, then are the mass and the water flowing in opposite directions through the stack. When it is desired to obtain the most effective heat transfer between mass and water during the cooling of the mass, such counter-flow is advantageous. The cooling stage heat exchanger stack then obtains the highest heat exchange effect or the smallest possible outer dimensions.

When the mass inlet tube part and the water inlet tube part are arranged at the same side of the stack, and at the opposite side of the stack are arranged both the mass outlet tube part and the water outlet tube part, then are the mass and the water flowing in the same direction through the stack. When it is desired to obtain temperatures of mass and water which are close to each other at the end of the stack, i.e. at the termination of the cooling process, such co-current flow or parallel flow of mass and water is advantageous.

When a pre-heating stage for the mass is arranged in a second inventive plate heat exchanger in front of the cooling stage, the height of the inventive apparatus is reduced to the lowest possible level in comparison with the height of a prior art apparatus. An apparatus having a column with a pre-heating stage, a cooling stage, a crystallisation stage and a re-heating stage is the highest of all prior tempering apparatuses. For example, is the height reduced from 300 cm for the mentioned prior art apparatus and to a height of 100 cm for the inventive apparatus having the same capacities.

The invention is explained further below under reference to preferred embodiments as well as the drawing, in which
fig. 1 is a schematic view of the inventive tempering apparatus, seen from the front and with a plate-housing disclosed in dotted line,
fig. 2 is the same as in figure 1, seen from the side,
fig. 3 is a perspective view of a heat exchanger comprising the cooling stage of the inventive apparatus of figures 1 and 2,
fig. 4 is the same as in figure 3, seen in cross section from the mass inlet to mass outlet,
fig. 5 is some of the plates and intermediary gaskets from the cooling stage heat exchanger of figures 3 and 4, seen in perspective,
fig. 6 is a schematic view of a cross section from water inlet to water outlet of the cooling stage heat exchanger of figure 3,
fig. 6b is a detail of the cooling stage heat exchanger of fig. 6,
fig. 7 is another embodiment of the inventive apparatus of figure 1 with a pre-heating stage for the mass arranged in a further inventive heat exchanger, seen from the side,
fig. 8 is a schematic view of another embodiment of the inventive tempering apparatus, seen from the front and with a plate-housing disclosed in dotted line,
fig. 9 is the same as in figure 8, seen from the side,
fig. 10 is schematic view of a prior art tempering column, the inventive tempering apparatus of figures 7 and 8, and the inventive tempering apparatus of figures 1 and 2, and
fig. 11 is an element of the tempering columns, seen in vertical section.

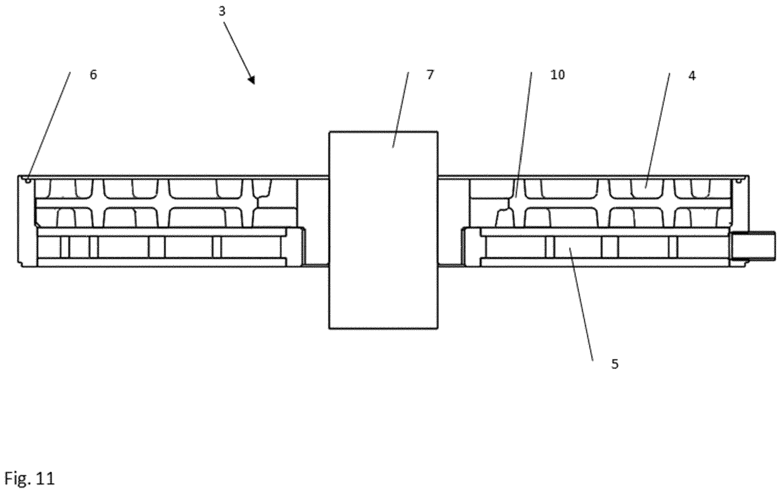

The inventive apparatus 1 for continuous tempering of fat-containing, crystallisable mass such as chocolate mass or creme mass comprises a column 2 of stacked circular elements 3 made of cast-iron. Each element 3 has an upper mass chamber 4 and a lower water chamber 5, as disclosed in figure 11. By the stacking of the elements 3, gaskets 6 ensures that the mass chambers 4 are closed of properly between the neighbouring elements 3. All the mass chambers 4 in the column are connected with each other by non-disclosed openings providing passage vertically through the water chambers 5. The water chambers 5 of the elements 3 are connected to each other in a particular crystallisation or re-heating stage. All the elements 3 in the crystallisation stage are connected to each other and to a supply of temperature controlled water. Many different layouts of water circulation systems are well-known, so these are not described in further detail.

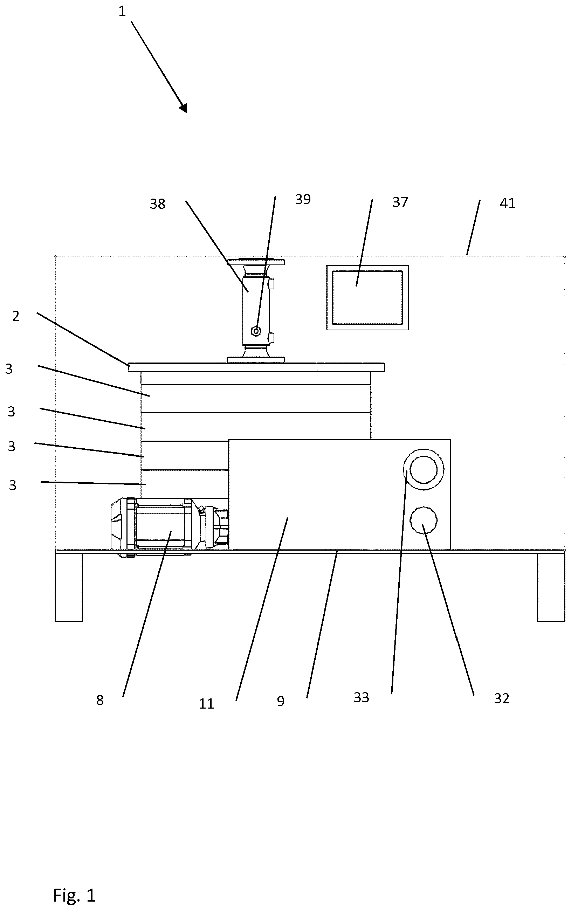

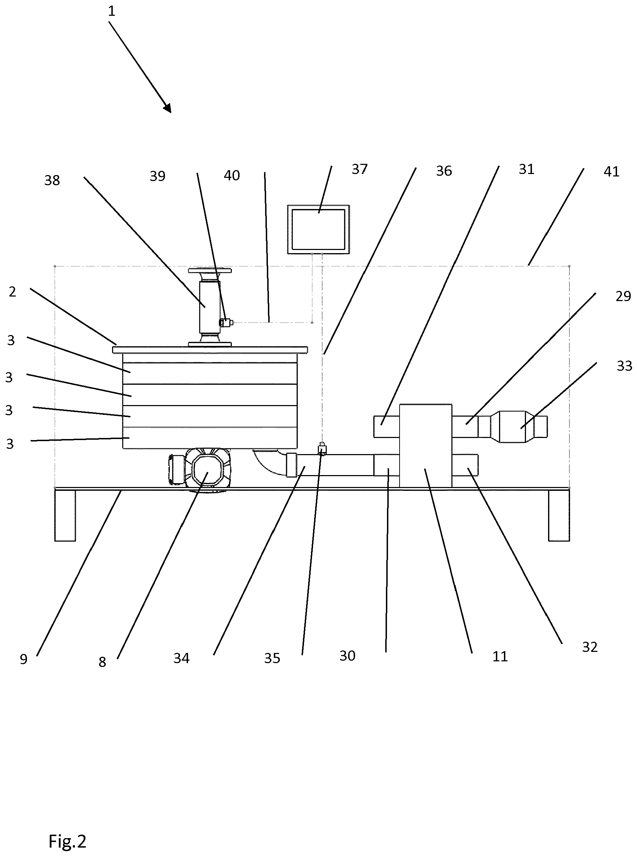

A central drive shaft 7 is shown schematically in part, and is driven by a gear motor 8 arranged on the frame or support 9 of the apparatus 1, as disclosed in figure 1 and 2. The drive shaft 7 is in engagement with mixing elements 10 arranged in each of the mass chambers 4. The mixing elements 10 of the known columns are propels, discs or even planetary mixers. In figure 11 is disclosed a commonly applied mixing propel, seen in section.

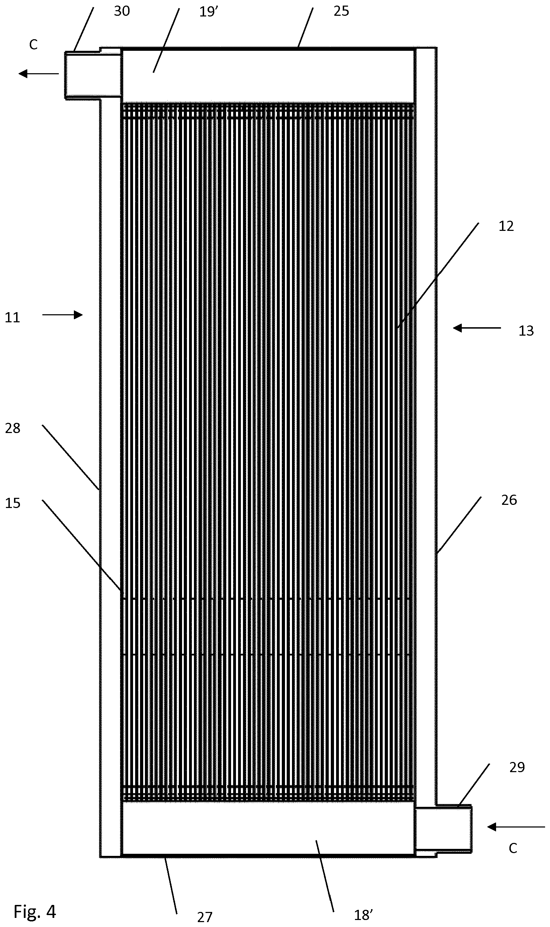

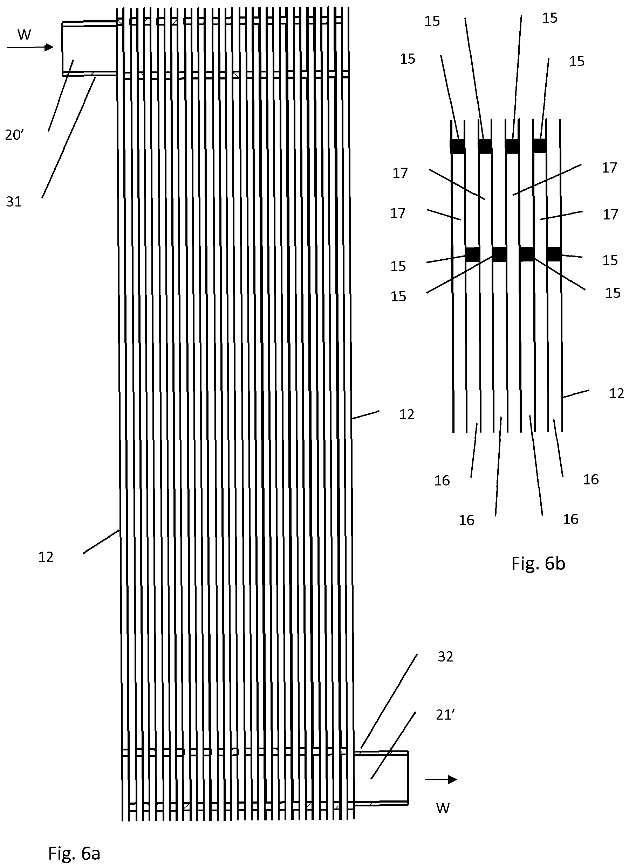

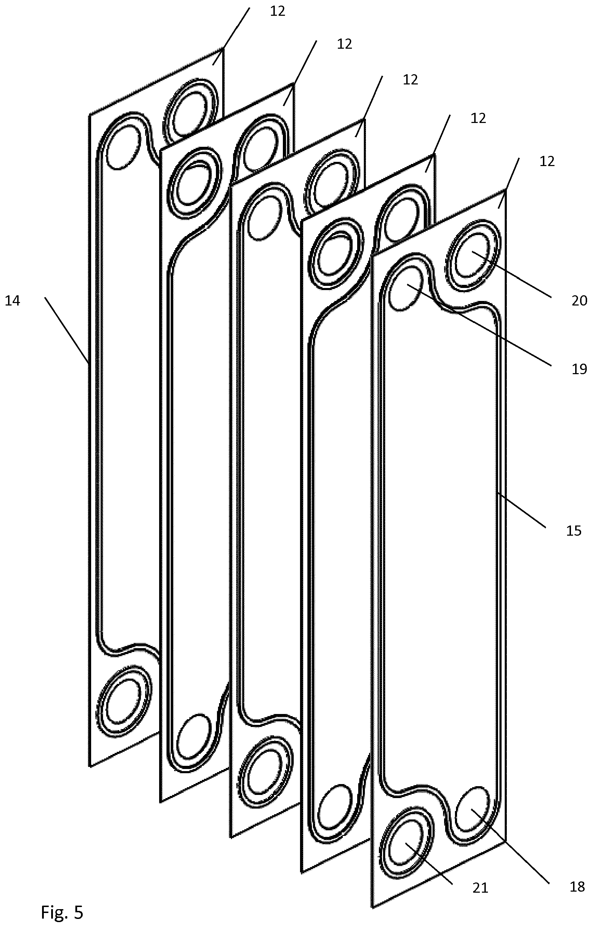

The cooling stage of the mass tempering apparatus 1 is arranged in a heat exchanger 11 having a row of parallel plates 12 arranged in a stack 13, i.e. figures 1-6. The plates 12 are mutually sealed by intermediary gaskets 15 at their neighbouring surfaces, typically close to their edges 14 or periphery, i.e. figure 5. The "mass flow side" of the heat exchanger is disclosed in figure 4. The arrows C represents the flow of the chocolate. The common first inlet channel 18' and the common first outlet channel 19' for the mass, are disclosed in figure 4 in a simplified manner as created by blank holes 18 and 19. By studying figures 5 and 6 it is clearly seen, that the inlet channel 18' and outlet channel 19' for the mass are created by the holes in the plates.

The "water flow side" of the cooling stage heat exchanger is disclosed in figure 6a. In greater detail and in simplified view are in figure 6b disclosed the intermediary, neighbouring channels 16, 17 between the plates 12.

Every second channel 16 in the row of plates 12 are connected with the common first inlet channel 18' and the common first outlet channel 19' for the flow of mass there through. Each of the intermittent, neighbouring channels 17 are connected with a common second inlet channel 20' and a common second outlet channel 21' for the flow of water there through.

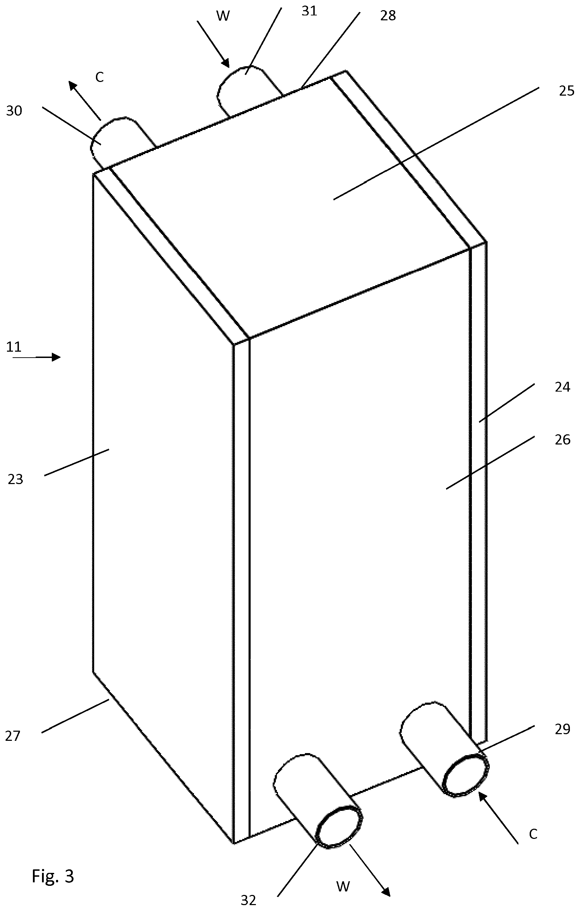

The figures 3-6 are schematic drawings focused on disclosing the principal build-up of the inventive cooling stage in terms of understanding the inventive solution. Especially may the number of plates 12 in practice deviate from the disclosed numbers.

The plates 12 are disclosed as being planar. However, they can have several other forms such as being corrugated or other types of depressions, as long as the mass is flowing simultaneously in a row of parallel streams being cooled by intermittent water channels through the heat exchanger.

At figure 3, the stack of plates 13 is arranged in a cubic box 22 made up of side panels 23-28, which provide for easy cleaning on the outside of the heat exchanger. However, many configurations are possible as long as the intermittent, neighbouring channels for mass and water are available. The stack of plates and intermittent gaskets may for example be arranged on bars and squeezed together, so the channels between the plates thereby are kept tight. Side panels are then not necessary.

The common first inlet channel 18' is connected with a mass inlet tube part 29 at one side 26 of the heat exchanger 11. The common first outlet channel 19' is connected with a mass outlet tube part 30 at the other side 28 of the exchanger 11, i.e. figures 3 and 4.

As disclosed in figures 3 and 6 is the common second inlet channel 20' connected with a water inlet tube part 31 arranged at the side 28 of the exchanger 11. The common second outlet channel 21' is connected with a water outlet tube part 32 arranged at the opposite side 26 of the exchanger 11. The arrows W depict the flow directions of the water. With this embodiment, the mass and the water are in counter-flow in the heat exchanger 11 providing a highly effective heat transfer between the mass and the colder water. The water inlet tube part 31 and the water outlet tube part 32 are adapted to be connected with a circuit of temperature regulated water, which is not disclosed, as it is not part of the invention as such. Important only, is that the circuit continuously delivers water flow to the inlet tube part 31, so that the heat exchanger is controlled to the desired extent or level for the temperature of the mass leaving the exchanger through the mass outlet tube part 30.

A mass pump 33 is connected to the mass inlet tube part 29 as disclosed in figure 2. The pump 33 is to its suction side adapted to be connected with a non-disclosed conduit leading mass to the pump from a tank or other supply of mass. The mass outlet tube part 30 at the other side of the cooling stage heat exchanger 11, is via a mass conduit 34 connected with the column 2. A temperature measurement unit 35 is arranged in the conduit 34 and is wired 36 to a control screen 37, which in this embodiment comprises a CPU or other process control unit. A mass outlet conduit 38 from the column comprises a second temperature measurement unit 39, which is also wired 40 to the control screen 37. A dotted line 41 represents the housing of the apparatus 1 in which the control screen 37 is arranged. In figure 1 is the control screen 37 shown in its correct position in the housing 41, however, in figure 2 the screen 37 is depicted schematically above the housing 41 for the sake of clarity.

During production the pump 33 runs continuously, so that the mass is feed from a storage tank and to the cooling stage heat exchanger 11. When the mass is a chocolate mass recipe it is heated in the storage tank to a temperature of 45-50 °C. The mass is then free from any crystals as the temperature is then well above the highest melting temperature for crystals available in solid chocolate mass.

In a liquid state is the mass pumped into the common first inlet channel 18', in which it is being split into several streams when entering each second channel 16, i.e. figures 4-6. The mass is then flowing simultaneously in a row of parallel streams through the channels 16 to be mixed again in the common first outlet channel 19'. Simultaneously, water is pumped to the common second inlet channel 20', in which it is being split into several streams by entering each second, intermittent, neighboring channel 17. Flowing through the parallel channels 17 the water is heat-exchanging with the mass in the channels 16, where after the water streams are mixed again in the common second outlet channel 21', i.e. figure 6.

The mass channels 16 of the inventive cooling stage heat exchanger 11 are free from any intermediary scrapers, discs or wings moving through the chambers such as being common in the cooling stages of the prior columns. The channels 16 are slim, having a width of 1-10 mm, in comparison to the extension of the plates 12. The row of the many parallel channels 16 ensure, that the mass is split into several "plate-like" streams, which are simultaneously exposed to accurately the same cooling conditions exercised by each of the intermittent, neighboring water channels 17. When mass from each of the channels 16 are mixed again in the common first outlet channel 19', it is completely homogenous and is having the same temperature in all parts of the mass flow. In the cooling stages of the prior art columns the mass flow is mixed and cooled differently during its passage through the successive, serially connected mass chambers in the elements. The surface temperatures and mixing intensity of a particular mass chamber varies from center to periphery which provides for in-homogenous mass in a cooling stage.

In the embodiment disclosed, the channels have a width of 3 mm, so that the mass flows through the parallel channels 16 as parallel sheets or like thick pages in a big book.

The temperature of the uniform and homogenous mass leaving the common first outlet channel 19' of the cooling stage heat exchanger 11, is controlled sharply within tenths of a degree. A desired mass temperature is pre-set at the control screen 37, and is measured continuously by the mass temperature measurement unit 35 extending into the mass in the conduit 34, which is connecting the outlet 19 and the crystallization stage in the column 2. The CPU or computer of the control screen 37 then controls the cooling water temperature and flow continuously being delivered to the common second inlet channel 20'. The control is in accordance with the obtained mass temperature received from the unit 35, so that the cooling stage 11 removes the necessary heat from the mass for obtaining the desired pre-set mass temperature in the conduit 35.

Depending on the temperature, at which crystals are created in the particular mass, the pre-set temperature to be obtained at the unit 35 could be set slightly above the crystal-creation temperature. When the mass is a certain recipe of milk chocolate, the temperature could be set to 27°C at the unit 35. The crystal-creation temperature is 26,5°C.

A desired output temperature for the ready crystallized mass to be obtained at the second temperature measurement unit 39, is also pre-set via the control screen 37. For the particular recipe of milk chocolate, it could for example be 26°C. The water circuit of the column 2 is controlled automatically, so that when the water flow through the chambers 5 of the elements, the mass is cooled accurately enough for obtaining the desired pre-set temperature when it is leaving the crystallization column through the output conduit 38. The gear motor 8 continuously revolves the shaft 7 with the mixing propels 10, thereby mixing the created crystals up into the mass.

At the specific apparatus being used for tempering of milk chocolate mass, the inventive apparatus according to figures 1-6 has a maximum capacity of 4000 kg of milk chocolate per hour. When orientated as in figures 1 and 2, the cooling stage heat exchanger 11 has the dimensions of width: 500 mm and height: 250 mm. The horizontal depth of the exchanger 11 is measured in the stacking direction of the plates 12. It is 300 mm when 35 plates 12 are stacked with an average width of each of the channels 16 or 17 of 3 mm. The total effective heat exchange area of the plates 12 are then around 8 m2.

The crystallization stage column 2 constitutes of four elements 3 each having a diameter of 650 mm.

Due to the parallel cooling provided in the inventive cooling stage heat exchanger, it is possible to provide a uniform and homogenous mass, that can be controlled sharply in temperature. Creation of any crystals and especially undesirable, lower melting crystals such as βIV-crystals and α-crystals in chocolate mass are then avoided though the mass is cooled to a temperature within tenth of a degree above the highest crystals creation temperature for the particular mass.
In the present example of the inventive apparatus according to figures 1-6, the crystallization stage column 2 is further controllable to such extent, that the milk chocolate mass is kept homogenous, and only a slight temperature lowering of 0,5-1,0°C through the column 2 is obtained. The desirable, stable βV-crystals are then created in the mass, however, lower melting, unstable crystals are avoided. It is then possible to avoid any re-heating stage on top of the crystallization stage of the column for melting out again such undesirable and unstable crystals.

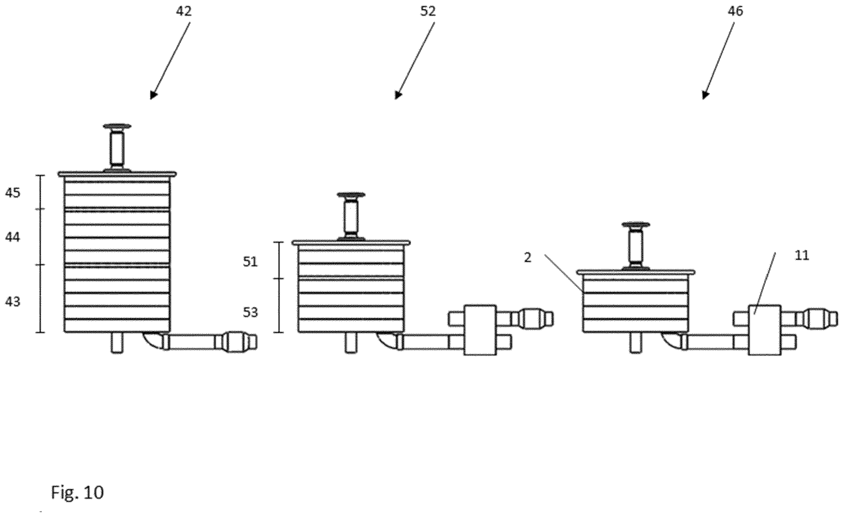

In figure 10 is schematically disclosed a prior art column 42 having a maximum capacity of tempering 4000 kg milk chocolate per hour. The column 42 has a cooling stage 43 of 5 elements height, a crystallization stage 44 of 4 elements height and a re-heating stage 45 of 2 elements height. A total of 11 elements constitute the height of the column 42. In the cooling stage 43 are the mass and the water in counter-flow, and the water is cold, typically 10-14°C for providing the necessary cooling effect on the mass with that capacity. Different types of crystals are then created in especially chocolate mass, such as the milk chocolate mass. Consequently, the re-heating stage 45 is necessary to melt out the undesirable, lower melting crystals again.

To the difference from the 11 elements height of the prior art column 42, the column 2 of the inventive apparatus 46 only requires a column having a height of 4 elements. The building height and the center of gravity of the inventive apparatus 46 is then much lower than for the prior art column 42 as seen in figure 10.

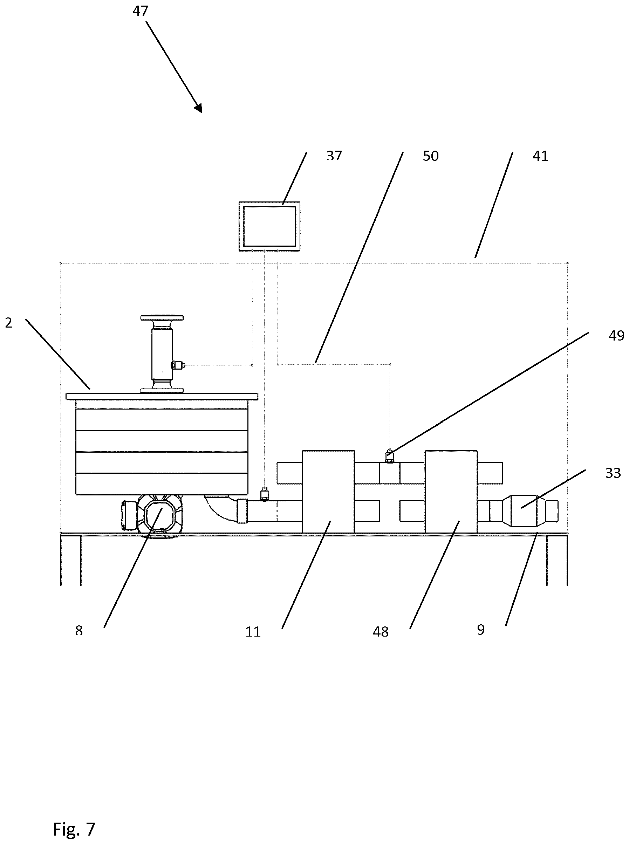

In figure 7 is disclosed the inventive apparatus 47 having all the parts of the apparatus 1 of figures 1-6. Furthermore, is under the housing 41 arranged a further inventive heat exchanger 48, which is used for heating up the supplied mass to a crystal-free temperature before entering the cooling stage heat exchanger 11. By the prior art columns 42, such pre-heating stage is arranged with even further elements 3 in front of the cooling stage 43, i.e. at the bottom of the column 42 in figure 10. The column then grows in height and becomes even more difficult to handle and transport.

The innovative heat exchanger 48 providing the pre-heating stage is arranged at the support 9 and preserves the low center of gravity. A further temperature measurement unit 49 is arranged in the tube-connection between the heat exchangers 48 and 11. The unit 49 is wired 50 to the control screen 37, so that the mass temperature is controlled to a desired level, such as 45-50°C for chocolate mass before entering the cooling stage exchanger 11.

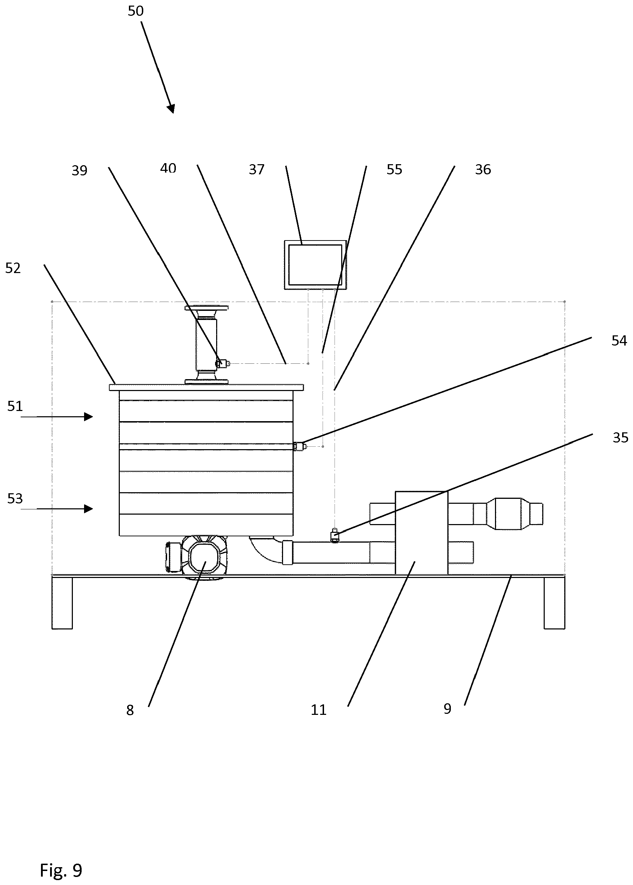

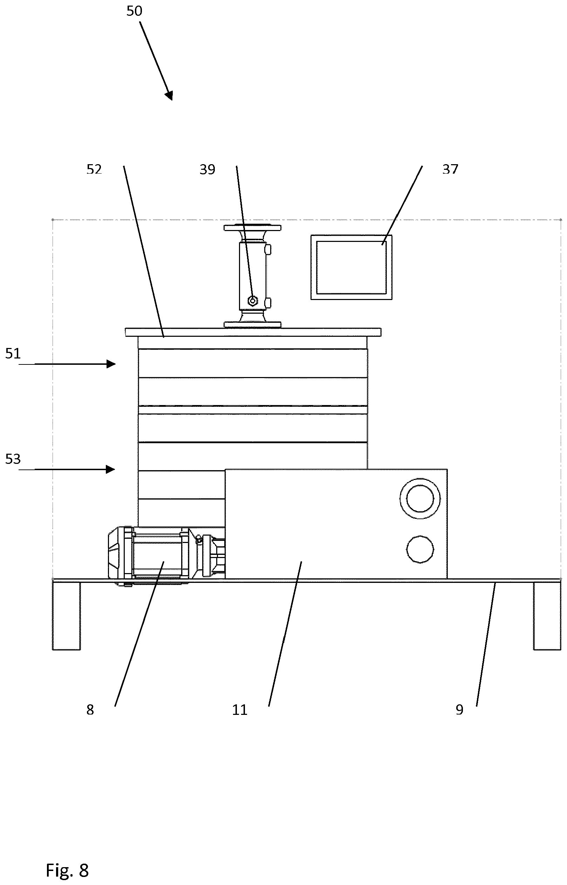

In figure 8 and 9 are disclosed another embodiment 50 of the inventive apparatus. In in excess to the apparatus 1 of figures 1-6, the apparatus 50 of figures 8, 9 has an upper re-heating stage 51 arranged in further elements 3 on top of the column 2 of figures 1 and 2.
The column 52 of the tempering apparatus 50 then constitutes both a crystallization stage 53 and a re-heating stage 51 upon that. A further temperature measurement unit 54 is inserted in between the crystallization stage 53 and the re-heating stage 51 and is wired to the control screen 37. This embodiment is necessary when it is not possible to avoid undesirable crystals in the mass during its passage through the crystallization stage 53 of the column 52. The pre-set temperature to be achieved at the unit 39 is then set to be slightly higher than the temperature to be achieved at the unit 54 after the crystallization stage. The temperature could typically be 0,5-1,0°C higher at the unit 39 than at the unit 54. The height of the column 52 is disclosed in figure 10 for comparison with the much higher prior art column 42.
- 1:: apparatus for continuous tempering
- 2:: column
- 3:: cast-iron element
- 4:: mass chamber
- 5:: water chamber
- 6:: gasket
- 7:: shaft
- 8:: gear motor
- 9:: frame or support
- 10:: mixing elements
- 11:: plate heat exchanger
- 12:: plates
- 13:: stack of plates
- 14:: edges of plates
- 15:: gaskets
- 16:: mass channels
- 17:: water channels
- 18:: hole
- 19:: hole
- 20:: hole
- 21:: hole
- 18':: common first inlet channel for mass
- 19':: common first outlet channel for mass
- 20':: common second inlet channel for water
- 21':: common second outlet channel for water
- 22:: cubic box
- 23-28:: side panels
- 29:: mass inlet tube part
- 30:: mass outlet tube part
- 31:: water inlet tube part
- 32:: water outlet tube part
- 33:: mass pump
- 34:: mass conduit
- 35:: temperature measurement unit
- 36:: electrical wire
- 37:: control screen
- 38:: mass outlet conduit
- 39:: temperature measurement unit
- 40:: electrical wire
- 41:: housing
- 42:: prior art tempering column
- 43:: cooling stage
- 44:: crystallization stage
- 45:: re-heating stage
- 46:: inventive apparatus
- 47:: inventive tempering apparatus
- 48:: heat exchanger
- 49:: temperature measurement unit
- 50:: another embodiment of tempering apparatus
- 51:: re-heating stage
- 52:: column
- 53:: crystallization stage
- 54:: temperature measurement unit
- 55:: wiring

## Claims

1. Apparatus (1) comprising a cooling stage connected with a crystallisation stage for continuous tempering of a fat-containing, crystallisable mass such as chocolate mass or creme mass, comprising a column (2) of mass chambers (4) and intermediary water chambers (5) arranged in stacked elements (3), a central drive shaft (7) in engagement with mixing elements (10) arranged in the mass chambers (4), and which crystallisation stage is arranged in the column (2),
**characterised in,**
**that** the cooling stage is arranged in a heat exchanger (11) having at least one row of parallel plates (12) arranged in a stack (13) sealed at their edges (14) providing intermediary, neighbouring channels (16, 17) each having an inlet hole (18, 20) and an outlet hole (19, 21) in each of the plates (12),
**that** every second channel (16) in the row is connected with a common first inlet channel (18') created by the first inlet holes (18) in the plates (12) and a common first outlet channel (19') created by the first outlet holes (19) in the plates (12) for the flow of mass there through,
and **that** each of the intermittent, neighbouring channels (17) are connected with a common second inlet channel (20') created by the second inlet holes (20) in the plates (12) and a common second outlet channel (21') created by the second outlet holes (21) in the plates (12) for the flow of water medium there through.

2. Apparatus according to claim 1, **characterised in, that** the intermediary, neighbouring channels (16, 17) between the parallel plates have a width of 1-10 mm.

3. Apparatus according to claim 1, **characterised in, that** the crystallisation stage extends over all the chambers (4) of the column (2).

4. Apparatus according to claim 1, **characterised in, that** the row of plates (12) is arranged as a cubic stack (13), and that the common first inlet channel (18') is connected with a mass inlet tube part (29) at one side of the stack and that the common first outlet channel (19') is connected with a mass outlet tube part (30) at the opposite side of the stack, and
that the common second inlet channel (20') is connected with a water inlet tube part (31) at one side of the stack and that the common second outlet channel (21') is connected with a water outlet tube part (32) at the opposite side of the stack, or vice versa.

5. Apparatus according to claim 4, **characterised in, that** the mass inlet tube part (29) and the water outlet tube part (32) are arranged at the same side (26) of the stack (13), and at the opposite side of the stack (13) are both the mass outlet tube part (30) and the water inlet tube part (31) arranged.

6. Apparatus according to claim 4, **characterised in, that** the mass inlet tube part and the water inlet tube part are arranged at the same side of the stack, and at the opposite side of the stack are both the mass outlet tube part and the water outlet tube part arranged.

7. Apparatus according to claim 1, **characterised in, that** a pre-heating stage for the mass in front of the cooling stage is arranged in a second plate heat exchanger (48).

## Patentansprüche

1. Vorrichtung (1), umfassend eine Kühlstufe, die mit einer Kristallisationsstufe verbunden ist, zum kontinuierlichen Temperieren einer fetthaltigen kristallisierbaren Masse, beispielsweise einer Schokoladenmasse oder Crememasse, umfassend eine Säule (2) aus Massekammern (4) und zwischengeschalteten Wasserkammern (5), die in gestapelten Elementen (3) angeordnet sind, eine mittige Antriebswelle (7) in Eingriff mit Mischelementen (10), die in den Massekammern (4) angeordnet sind, und wobei die Kristallisationsstufe in der Säule (2) angeordnet ist,
**dadurch gekennzeichnet,**
**dass** die Kühlstufe in einem Wärmetauscher (11) angeordnet ist, der mindestens eine Reihe von in einem Stapel (13) angeordneten parallelen Platten (12) aufweist, die an ihren Kanten (14) abgedichtet sind und zwischengeschaltete benachbarte Kanäle (16, 17) vorsehen, die in jeder der Platten (12) jeweils ein Einlassloch (18, 20) und ein Auslassloch (19, 21) aufweisen,
**dass** jeder zweite Kanal (16) in der Reihe mit einem gemeinsamen ersten Einlasskanal (18'), der durch die ersten Einlasslöcher (18) in den Platten (12) geschaffen wird, und mit einem gemeinsamen ersten Auslasskanal (19'), der durch die ersten Auslasslöcher (19) in den Platten (12) geschaffen wird, für den Strom von Masse dort hindurch verbunden ist,
und **dass** jeder der dazwischen angeordneten benachbarten Kanäle (17) mit einem gemeinsamen zweiten Einlasskanal (20'), der durch die zweiten Einlasslöcher (20) in den Platten (12) geschaffen wird, und mit einem gemeinsamen zweiten Auslasskanal (21'), der durch die zweiten Auslasslöcher (21) in den Platten (12) geschaffen wird, für den Strom von Wassermedium dort hindurch verbunden ist.

2. Vorrichtung nach Anspruch 1, **dadurch gekennzeichnet, dass** die zwischengeschalteten benachbarten Kanäle (16, 17) zwischen den parallelen Platten eine Breite von 1-10 mm aufweisen.

3. Vorrichtung nach Anspruch 1, **dadurch gekennzeichnet, dass** sich die Kristallisationsstufe über alle Kammern (4) der Säule (2) erstreckt.

4. Vorrichtung nach Anspruch 1, **dadurch gekennzeichnet, dass** die Reihe von Platten (12) als kubischer Stapel (13) angeordnet ist und dass der gemeinsame erste Einlasskanal (18') auf einer Seite des Stapels mit einem Masseeinlassrohrteil (29) verbunden ist und dass der gemeinsame erste Auslasskanal (19') auf der entgegengesetzten Seite des Stapels mit einem Masseauslassrohrteil (30) verbunden ist, und
dass der gemeinsame zweite Einlasskanal (20') auf einer Seite des Stapels mit einem Wassereinlassrohrteil (31) verbunden ist und dass der gemeinsame zweite Auslasskanal (21') auf der entgegengesetzten Seite des Stapels mit einem Wasserauslassrohrteil (32) verbunden ist oder umgekehrt.

5. Vorrichtung nach Anspruch 4, **dadurch gekennzeichnet, dass** das Masseeinlassrohrteil (29) und das Wasserauslassrohrteil (32) auf derselben Seite (26) des Stapels (13) angeordnet sind und auf der entgegengesetzten Seite des Stapels (13) sowohl das Masseauslassrohrteil (30) als auch das Wassereinlassrohrteil (31) angeordnet sind.

6. Vorrichtung nach Anspruch 4, **dadurch gekennzeichnet, dass** das Masseeinlassrohrteil und das Wassereinlassrohrteil auf derselben Seite des Stapels angeordnet sind und auf der entgegengesetzten Seite des Stapels sowohl das Masseauslassrohrteil als auch das Wasserauslassrohrteil angeordnet sind.

7. Vorrichtung nach Anspruch 1, **dadurch gekennzeichnet, dass** eine Vorwärmstufe für die Masse vor der Kühlstufe in einem zweiten Plattenwärmetauscher (48) angeordnet ist.

## Revendications

1. Appareil (1) comprenant un étage de refroidissement raccordé à un étage de cristallisation à des fins de tempérage continu d'une masse cristallisable contenant des matières grasses telle qu'une masse de chocolat ou une masse de crème, comprenant une colonne (2) de chambres de masse (4) et de chambres d'eau intermédiaires (5) disposées dans des éléments empilés (3), un arbre d'entraînement central (7) en prise avec des éléments de mélange (10) disposés dans les chambres de masse (4), et ledit étage de cristallisation étant disposé dans la colonne (2), **caractérisé**
**en ce que** l'étage de refroidissement est disposé dans un échangeur thermique (11) comportant au moins une rangée de plaques parallèles (12) agencées en un empilement (13) fermées hermétiquement au niveau de leurs bords (14), formant des canaux adjacents intermédiaires (16, 17) comportant chacun un trou d'entrée (18, 20) et un trou de sortie (19, 21) dans chacune des plaques (12),
**en ce qu'**un canal (16) sur deux dans la rangée est raccordé à un premier canal d'entrée commun (18') créé par les premiers trous d'entrée (18) dans les plaques (12) et un premier canal de sortie commun (19') créé par les premiers trous de sortie (19) dans les plaques (12) pour l'écoulement de masse à travers ceux-ci,
et **en ce que** chacun des canaux adjacents intermittents (17) est raccordé à un second canal d'entrée commun (20') créé par les seconds trous d'entrée (20) dans les plaques (12) et un second canal de sortie commun (21') créé par les seconds trous de sortie (21) dans les plaques (12) pour l'écoulement d'une substance aqueuse à travers ceux-ci.

2. Appareil selon la revendication 1, **caractérisé en ce que** les canaux adjacents intermédiaires (16, 17) entre les plaques parallèles présentent une largeur de 1 à 10 mm.

3. Appareil selon la revendication 1, **caractérisé en ce que** l'étage de cristallisation s'étend sur l'ensemble des chambres (4) de la colonne (2).

4. Appareil selon la revendication 1, **caractérisé en ce que** la rangée de plaques (12) est agencée sous la forme d'un empilement cubique (13), et **en ce que** le premier canal d'entrée commun (18') est raccordé à une partie tube d'entrée de masse (29) d'un côté de l'empilement et **en ce que** le premier canal de sortie commun (19') est raccordé à une partie tube de sortie de masse (30) du côté opposé de l'empilement, et
**en ce que** le second canal d'entrée commun (20') est raccordé à une partie tube d'entrée d'eau (31) d'un côté de l'empilement et **en ce que** le second canal de sortie commun (21') est raccordé à une partie tube de sortie d'eau (32) du côté opposé de l'empilement, ou vice versa.

5. Appareil selon la revendication 4, **caractérisé en ce que** la partie tube d'entrée de masse (29) et la partie tube de sortie d'eau (32) sont disposées du même côté (26) de l'empilement (13) et, de l'autre côté de l'empilement (13), sont disposées à la fois la partie tube de sortie de masse (30) et la partie tube d'entrée d'eau (31).

6. Appareil selon la revendication 4, **caractérisé en ce que** la partie tube d'entrée de masse et la partie tube d'entrée d'eau sont disposées du même côté de l'empilement et, de l'autre côté de l'empilement, sont disposées à la fois la partie tube de sortie de masse et la partie tube de sortie d'eau.

7. Appareil selon la revendication 1, **caractérisé en ce qu'**un étage de préchauffage pour la masse devant l'étage de refroidissement est disposé dans un second échangeur thermique à plaques (48).
